# EUROPÄISCHE PATENTSCHRIFT

(11) **EP 1 893 432 B1**
(45) Veröffentlichungstag und Bekanntmachung des Hinweises auf die Patenterteilung: **24.09.2008**
(21) Anmeldenummer: 06818074.4
(22) Anmeldetag: 14.11.2006
(51) Int. Cl.: B60J 7/06

(54) **VERDECKGESTELL MIT VERRIEGELUNGSEINRICHTUNG**
CANOPY FRAME COMPRISING A LOCKING MECHANISM
BERCEAU DE COUVERTURE DOTE D'UN DISPOSITIF DE VERROUILLAGE

(30) Priorität: 16.11.2005 DE 102005054488
(43) Veröffentlichungstag der Anmeldung: 05.03.2008
(73) Patentinhaber: VBG GROUP TRUCK EQUIPMENT GmbH, 47807 Krefeld (DE)
(72) Erfinder: REMMEL, Lars, 42897 Remscheid (DE)
(74) Vertreter: Sparing, Rolf Klaus
(86) Internationale Anmeldenummer: PCT/DE2006/001998
(87) Internationale Veröffentlichungsnummer: WO 2007/056989

(56) Entgegenhaltungen:
- DE-A1- 4 136 257
- DE-A1- 19 628 433
- US-A- 5 524 953

## Beschreibung

Die Erfindung betrifft ein Verdeckgestell für einen Planenaufbau nach dem, im Document US 5524953A offenbarten Oberbegriff des Anspruchs 1.

Aus der Praxis sind Verdeckgestelle bekannt, bei denen der in der Regel vorderste Spriegel, dem die Dachplane zugeordnet ist, in einer geschlossenen Position arretiert wird. Hierbei weist der Längsträger, auf dem der Spriegel sich abwälzt, eine mit dem Gleitelement des Spriegels, in der Regel einer Tragrolle, zusammenwirkende Rampe auf, die meist einstückig in derjenigen Lauffläche des Längsträgers vorgesehen ist, auf der sich das Gleitelement abrollt. Nachteilig bei dieser Lösung ist insbesondere die sehr mangelhafte Funktion bei Umwelteinflüssen wie Regen oder Schnee aufgrund der kraftschlüssigen Verriegelung. Ferner ist nachteilig, dass der entsprechende Längsträgerabschnitt von den anderen Längsträgerabschnitten verschieden ausgestaltet ist und daher beim Zusammenbau Fehler auftreten können. Ebenso wird durch die unterschiedliche Ausgestaltung der Längsträger eine unterschiedliche, mit erhöhten Kosten verbundene Serienlänge erreicht.

Eine andere aus der Praxis bekannte Lösung beinhaltet einen von dem Gleitelement eines Spriegels zu überwindenden Keil, dessen Keilsteigung in Richtung der geschlossenen Lage der Dachplane ansteigt, wobei der Keil durch den Bediener mittels eines Seiles aus dem Verfahrweg entlang der Laufbahn herausgezogen werden kann. Nachteilig ist hierbei, dass ein Seil in den Laderaum hineinragt, und dass die Bedienung es erfordert, dass die Bedienperson auf die Ladepritsche steigt.

DE 33 27 755 A1 zeigt ein Verdeckgestell für einen Planenaufbau, bei dem eine Reihe von in der Art eines umgedrehten U gebildeten bügelförmigen Bauteilen einen der Basis des U entsprechenden mittleren Bereich aufweisen, der einen Hubspriegel definiert, an dem eine Verdeckplane festlegbar ist. Die Extremitäten der bügelförmigen Bauteile sind mit Rollen verbunden, die in einer in dem Längsträger ausgebildeten Schiene verlagerbar sind. Verbindungsstangen verbinden jeweils eine Rolle mit einem mittleren Bereich eines an einer benachbarten Rolle anschließenden bügelförmigen Bauteils: Anstelle eines bügelförmigen Bauteils ist an der letzten Stelle des Verdeckgestells ein Portalbügel vorgesehen, in dessen Endbereich eine kleine Platte unbeweglich angeordnet ist, die über eine Gelenkverbindung mit einer mit Rollen versehenen Rollplatte verbunden ist. Die Rollen der Rollplatte sind dazu bestimmt, in einen schräg nach unten geneigten Abschnitt des Längsträgers abgesenkt zu werden, wodurch das Portal in eine geschlossene Lage verbracht wird. Ein an der Platte angeordneter Bolzen rastet hierbei unter der Vorspannung eines Federgliedes in eine Ausnehmung ein und verriegelt so den Portalbügel gegen das Chassis und seine Aufbauten. Zum Lösen der Verriegelung ist ein Stift quer zur Fahrtrichtung und drehbar in einer Hülse gelagert und endseitig mit einem über den Umfang des Stiftes vorspringenden Bolzen ausgestattet, wobei die Hülse mit einer Einhängevorrichtung ausgerüstet ist, an die Seile angekoppelt werden können. Wird das Seil in Öffnungsrichtung gezogen, verschwenkt der Stift den Bolzen, der damit gegen einen den Bolzen tragendes Riegelteil anschlägt und dieses außer Eingriff mit der Ausnehmung verlagert, so dass unter der Kraft einer die Verbindungsstangen und eine zu dieser benachbarte Rolle zusammenziehenden Feder das Verdeck sich wenigstens teilweise aufstellt. Ein Verlagern der bügelförmigen Bauteile oder des Portals zunächst in Schließrichtung ist hierzu nicht erforderlich.

DE 41 36 257 C2 zeigt ein Schiebeverdeck, bei dem mehrere Spriegel zwischen benachbarten Längsträgern verlagerbar sind, wobei ein Portalelement an einem hinteren, mit einem Rollenwagen versehenen Endspriegel schwenkbar angeordnet ist. Ein an dem Portalelement und an dem Rollenwagen angelenkter Führungshebel wird von einer Feder beaufschlagt, deren anderes Ende an einem ersten Ende einer Wippe angeordnet ist, wobei das andere Ende der Wippe das Gelenk für das Portalelement trägt. Hierdurch wird erreicht, dass die Feder in der vollständig aufgeklappten Lage des Portalelements und in der geschlossenen Lage des Portalelements jeweils die geringste Spannung aufweist und hierdurch das Portalelement auch in der geschlossenen Lage fixiert. Ein Verlagern des Portalelements zunächst in Schließrichtung ist zum Öffnen des Verdecks nicht vorgesehen.

DE 196 28 433 A1 zeigt ein Verdeckgestell für einen Planenaufbau, bei dem eine Dachplane über mehrere parallele Spriegel entlang von Längsträgern verlagerbar ist, wobei ein endseitig angeordnetes Portalelement mit einem Verriegelungsglied schwenkbar gekoppelt ist, wobei ein dem Portalelement abgekehrtes Ende des Riegelglieds als Haken ausgebildet ist, um eine Faltplane in einer geschlossenen Position zu arretieren.

EP 0 778 169 B1 bzw. DE 696 06 758 T2 zeigt ein Verdeckgestell für einen Planenaufbau, bei dem mehrere Spriegel entlang zweier benachbarter Längsträger verlagerbar sind und beim Zusammenschieben über Faltelemente zwischen den Spriegeln vorgesehene Hubspriegel zum Zusammenlegen der Dachplane anhebt. An dem hintersten Spriegel ist ein Portalelement angeordnet, das über einen Arm herabschwenkbar ist, wobei ein Verriegelungselement, das dem hintersten Spriegel zugeordnet ist, bei geschlossenem Portalelement mit einem an dem Längsträger vorgesehenen Zapfen zusammengreift, um das Portalelement zu verriegeln.

US 5 524 953 zeigt eine Abdeckung für einen Nutzfahrzeugaufbau, bei dem eine Mehrzahl von umgedreht U-förmige Bügeln eine Plane tragen. Die Bügel sind entlang seitlicher Schienen verschiebbar zur Freigabe einer Dachöffnung, wobei ein Ende eines Schenkels jedes Bügels jeweils an einem an den Schienen verlagerbaren Schlitten schwenkbar aufgenommen ist. An dem äußersten Schlitten ist ein Bedienrad drehbar gelagert, auf dessen Umfang ein Bolzen angeordnet ist, um den eine Schließplatte schwenkbar gelagert ist. An einem weiteren Umfangspunkt des Bedienrades ist ein Gelenk für eine Steuerstange vorgesehen, deren anderes Ende über ein Verbindungsgelenk mit dem äußersten Bügel verbunden ist. Zwischen dem Verbindungsgelenk und seiner Anlenkung an dem Schlitten weist der äußerste Bügel einen Riegelstift auf, der in einer Ausnehmung einer ersten profilierten Oberfläche der Schließplatte gefangen ist, wenn die Schließplatte in ihrer geöffneten Position angeordnet ist. Wird der Schlitten in seine Schließlage verlagert, schlägt eine Spitze der Schließplatte gegen mehrere Anschlagstifte an und wird hierdurch in eine abgesenkte Position gezwungen, in der die Ausnehmung den Riegelstift freigibt und ein Verschwenken des Bedienrades und des äußersten Bügels in eine Schließstellung ermöglicht ist. In dieser Schließstellung drückt der Riegelstift die Schließplatte über die profilierte Fläche gegen einen unteren Anschlagstift. Um den äußersten Bügel wieder aufzurichten, ist es erforderlich, den äußersten Bügel zurückzuziehen, beispielsweise über ein Zugkabel.

Es ist die Aufgabe der Erfindung, ein Verdeckgestell nach dem Oberbegriff des Anspruchs 1 anzugeben, bei dem eine einfache Verriegelung und Entriegelung gewährleistet ist.

Diese Aufgabe wird bei dem Eingangs genannten Verdeckgestell erfindungsgemäß mit den kennzeichnenden Merkmalen des Anspruchs 1 gelöst.

Das erfindungsgemäße Verdeckgestell weist zwei miteinander in Eingriff gelangende Riegelglieder auf, von denen jeweils eines dem zu verriegelnden Spriegel und das andere dem Längsträger zugeordnet ist, wobei das erste Riegelglied eine Kulissenführung aufweist, die dem zweiten Riegelglied eine Umgehung der Steigung des ersten Riegelgliedes dahingehend ermöglicht, dass es außerhalb der Steigung zurück in eine Lage geführt wird, in der der Formschluss entweder unmittelbar aufgehoben ist oder nach einem kurzen Verfahrweg aufgehoben ist. Hierbei kann die Bedienung des Planenaufbaus, insbesondere der Dachplane, in der für den Bediener üblichen Weise erfolgen, ohne dass dieser einzelne Keile oder dergleichen in den Verfahrweg bzw. aus dem Verfahrweg des Spriegels hinausverlagern muss. Auch ein Besteigen der Ladepritsche entfällt dann.

Die Erfindung schafft also vorteilhaft ein Verdeckgestell, bei dem der übliche Verfahrweg zum Schließen des Verdeckgestells zu einem formschlüssigen Verriegeln des entsprechenden Spriegels an dem Längsträger führt, ohne die üblichen Manipulationen zum Öffnen oder Schließen des Planenaufbaus zu beeinträchtigen.

Zweckmäßigerweise weist das zweite Riegelglied ein mit der Steigung des ersten Riegelgliedes zusammenwirkendes Gleitelement auf, dass z.B. als beweglicher oder unbeweglicher Zylinderabschnitt ausgebildet sein kann, wobei die Steigung des ersten Riegelgliedes das zweite Riegelglied mit seinem Gleitelement vorteilhaft bei einer Verlagerung des Spriegels in Schließbewegung anhebt.

Vorzugsweise ist das zweite Riegelglied um eine Achse faltbar oder schwenkbar, so dass das der Achse abgekehrte Ende des zweiten Riegelgliedes im wesentlichen eine Schwenkbewegung um die Achse ausführt und damit etwaige Höhenunterschiede, beispielsweise vorgegeben aufgrund der Steigung, nachvollzieht. Zweckmäßigerweise wird der Schwenkweg durch Endanschläge begrenzt, um ein Aushängen der Achse oder ein Abknicken zu vermeiden. Es ist weiterhin möglich, Federn vorzusehen, die das zweite Riegelglied in eine Nulllage vorspannen, in der das zweite Riegelglied auf die Steigung des ersten Riegelgliedes aufläuft.

Um die Kulissenführung zu definieren ist zweckmäßigerweise an dem ersten Riegelglied eine Fläche vorgesehen, die einen Rücksprung aufweist. Diese Fläche bildet einen Anschlag, der eine Verlagerung des Spriegels in Öffnungsrichtung des Verdeckgestells vermeidet. Ist zweckmäßigerweise in etwa in halber Höhe dieser Fläche eine Zwischenebene an dem ersten Riegelglied angeordnet, bildet die weitere Fläche zugleich eine Führungsfläche für einen Zapfenabschnitt des zweiten Riegelgliedes für die Verlagerung von einer Lage oberhalb der Mittelebene in eine Lage unterhalb der Mittelebene, wobei die Mittelebene hierzu einen Ausschnitt aufweist, der ein Herabgleiten entlang der weiteren Fläche zulässt.

Zweckmäßigerweise ist ein stegartiger Führungsabschnitt am unteren Ende der Kulissenführung in Schließrichtung des Verdeckgestells ausgebildet, der ein Durchfallen des zweiten Riegelelements verhindert und eine Auflage für das zweite Riegelelement bildet. Hierdurch ist gewährleistet, dass bei weiterer Beanspruchung in Öffnungsrichtung das zweite Riegelelement stets gegen die weitere Fläche in Anschlag gelangt und damit formschlüssig gehalten ist. Wird hingegen ausgehend von dieser formschlüssig Lage der Spriegel und damit das zweite Riegelglied wieder in Schließrichtung verlagert, wird der stegartige Führungsabschnitt überwunden.

Vorzugsweise weist das erste Riegelglied eine weitere, gegenüber der Horizontalen geneigte Rückführfläche auf, entlang derer das zweite Riegelglied insbesondere nach dem Austritt aus der Kulisse zurück in Öffnungsrichtung geführt werden kann. Die Neigung stellt insbesondere sicher, dass bei erneutem Verlagern des Spriegels in Schließrichtung das zweite Riegelglied erneut in eine Formschlusslage gelangt, ferner dass beim erstmaligem Auftreffen auf das erste Riegelglied die Steigung das zweite Riegelglied führt und nicht die weitere geneigte Rückführfläche.

Zweckmäßigerweise sind die beiden Riegelglieder als Kunststoffteile, insbesondere hergestellt im Spritzgussverfahren, ausgebildet, so dass die Formgebung einfach möglich ist. Es ist aber auch möglich, eines der beiden Teile aus Metall herzustellen oder aber den Kunststoff mit Metallteilen zu armieren.

Vorzugsweise ist das erste Riegelglied an dem Längsträger angeordnet, während das zweite Riegelglied an dem zu verriegelnden Spriegel angeordnet ist. Es versteht sich aber, dass ohne weiteres die beiden Riegelglieder in ihrer Zuordnung vertauscht werden können, wenn die entsprechenden Steigungen und Kulissenführungen derart ausgestaltet werden, dass sie funktional dieselbe Ver- bzw. Entriegelung des zu verriegelnden Spriegels an dem Längsträger bewirken.

Weitere Vorteile und Merkmale der Erfindung ergeben sich aus der nachfolgenden Beschreibung eines bevorzugten Ausführungsbeispiels sowie aus den abhängigen Ansprüchen.

Die Erfindung wird nachstehend unter Bezugnahme auf die anliegenden Zeichnungen anhand eines bevorzugten Ausführungsbeispiels näher erläutert.
- Fig. 1: zeigt eine perspektivische Ansicht eines Verdeckgestells mit einer Verriegelungseinrichtung.
- Fig. 2: zeigt einen Ausschnitt des Verdeckgestells mit Längsträger und Spriegel sowie der Verriegelungseinrichtung in einer ersten Bewegungsposition.
- Fig. 3: zeigt einen Ausschnitt des Verdeckgestells mit Längsträger und Spriegel sowie der Verriegelungseinrichtung in einer zweiten Bewegungsposition.
- Fig. 4: zeigt einen Ausschnitt des Verdeckgestells mit Längsträger und Spriegel sowie der Verriegelungseinrichtung in einer dritten Bewegungsposition.
- Fig. 5: zeigt einen Ausschnitt des Verdeckgestells mit Längsträger und Spriegel sowie der Verriegelungseinrichtung in einer vierten Bewegungsposition.
- Fig. 6: zeigt einen Ausschnitt des Verdeckgestells mit Längsträger und Spriegel sowie der Verriegelungseinrichtung in einer fünften Bewegungsposition.
- Fig. 7: zeigt eine Ansicht des ersten Riegelgliedes des Verdeckgestells aus Fig. 2 bis 6.

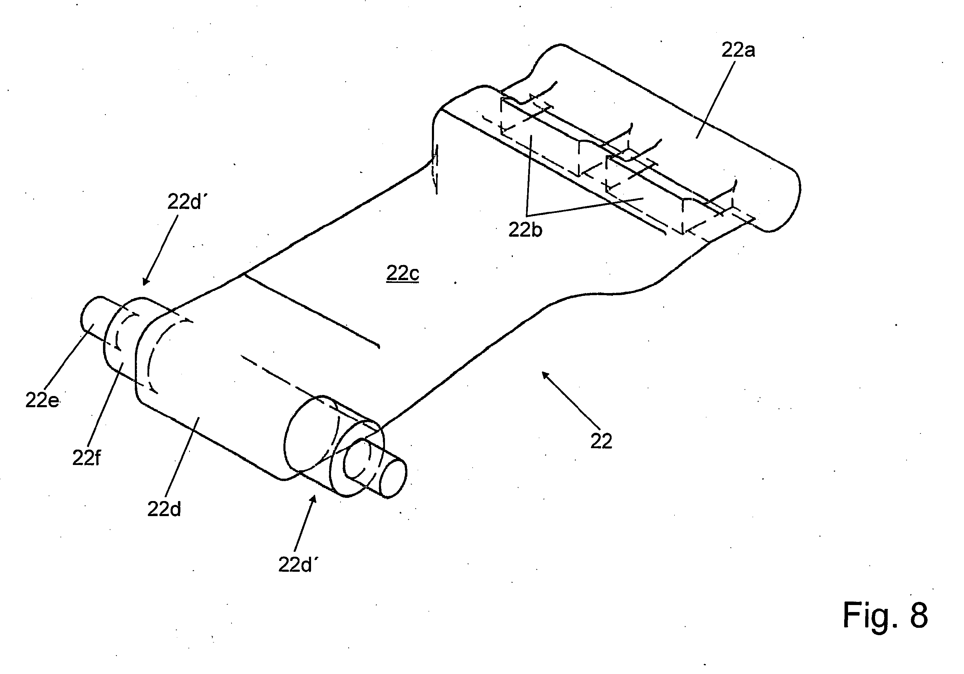

- Fig.8: zeigt eine Ansicht des zweiten Riegelgliedes des Verdeckgestells aus Fig. 2 bis 6.

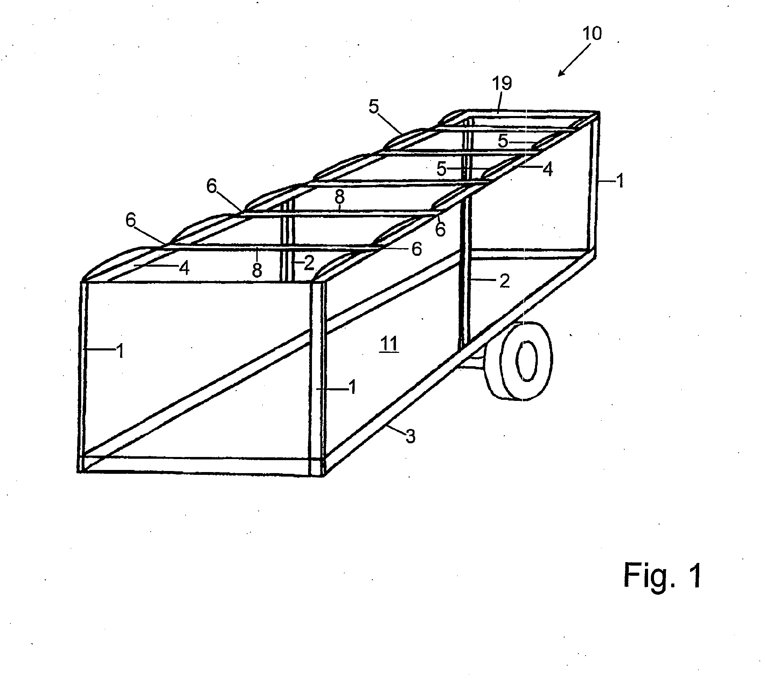

Der in Fig. 1 schematisch dargestellte Planenaufbau, bei dem es sich vorliegend um einen Sattelauflieger handelt, umfasst ein insgesamt mit 10 bezeichnetes Verdeckgestell, welches ein Fahrzeugchassis 3 überbaut, wobei eine Ladeplattform 11 Eckrungen 1 und Mittelrungen 2 abstützt, die zwei seitliche Längsträger 4, die in Fahrzeugrichtung verlaufen, abstützen. Der Längsträger 4 besteht aus zwei Teilen, die sich jeweils bis zur Mitte erstrecken und die sich auf einer gemeinsamen Mittelrunge 2 abstützen. Aus Gründen der Übersichtlichkeit sind nur zwei Mittelrungen 2 dargestellt, es versteht sich, dass mehrere Mittelrungen 2 vorgesehen sein können.

Zwischen den parallelen Längsträgern 4 erstrecken sich quer zur Fahrtrichtung verlaufende Spriegel 8, die endseitig jeweils einen Schlitten 6 aufweisen und die insgesamt eine mit 5 bezeichnete Dachplane abstützen. Die Spriegel 8 sind über die Spriegel 8 an entsprechenden Laufbahnen der Längsträger 4 in Fahrtrichtung verschieblich, wobei hierzu die Plane 5 zwischen benachbarten Spriegeln nach oben zwangsgefaltet wird. Zum Verriegeln der Dachplane ist im hinteren Bereich des Verdeckgestells 10 ein Portalelement 19 vorgesehen. Das Portalelement 19 ist an einem vorderen Spriegel 8 schwenkbar angelenkt und wird im Weiteren zur besseren Übersicht nicht dargetellt.

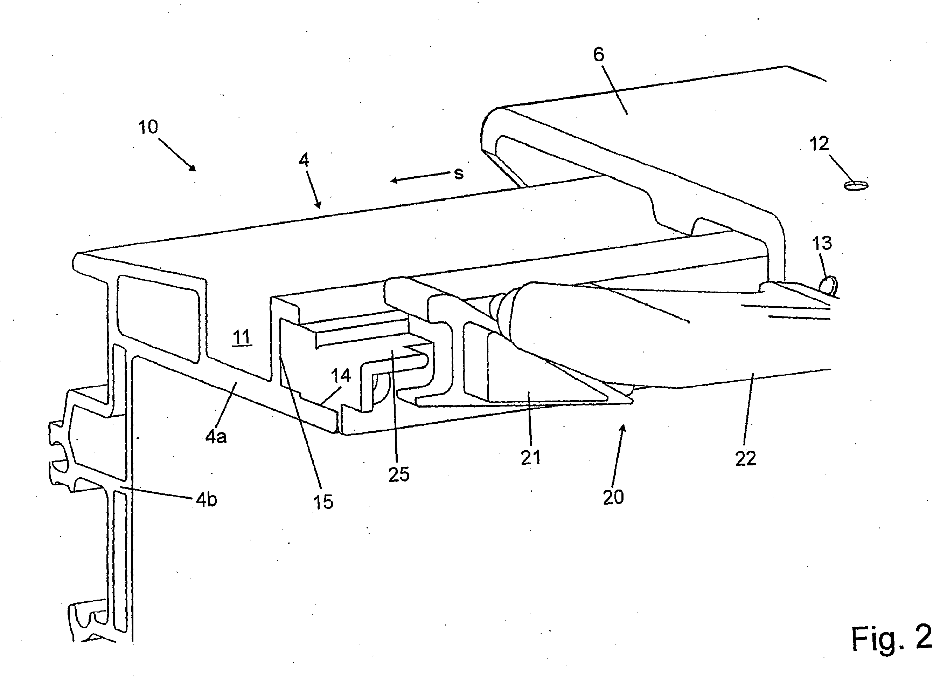

In Fig. 2 bis 6 erkennt man den Schließverlauf des vorderen Spriegels 8 entlang eines Längsträgers 4, der einen oberen, im wesentlichen horizontalen Schenkel 4a und einen unteren, im wesentlichen vertikalen Schenkel 4b aufweist. In dem Schenkel 4a ist ein Kanal 11 vorgesehen, in dem eine an dem Schlitten 6 befestigte Führungsrolle sich gegen die seitlichen vertikalen Wände abstützen kann. Die Vernietung der Führungsrolle ist in dem Schlitten 6 mit 12 angedeutet. Eine weitere Vernietung 13 deutet die Anordnung einer Tragrolle an, die sich auf einer Laufbahn 14 des Längsträgers abwälzt. Eine C-förmige Ausnehmung 15 des Längsträgers 4 bildet eine Aufnahme für eine Kippsicherung, die im wesentlichen parallel zu der bei 13 angelenkten Tragrolle von dem Schlitten 6 vorsteht.

An dem Verdeckgestell 10 ist eine Verriegelungseinrichtung 20 angeordnet, die aus einem ersten Riegelglied 21 und einem zweiten Riegelglied 22 besteht.

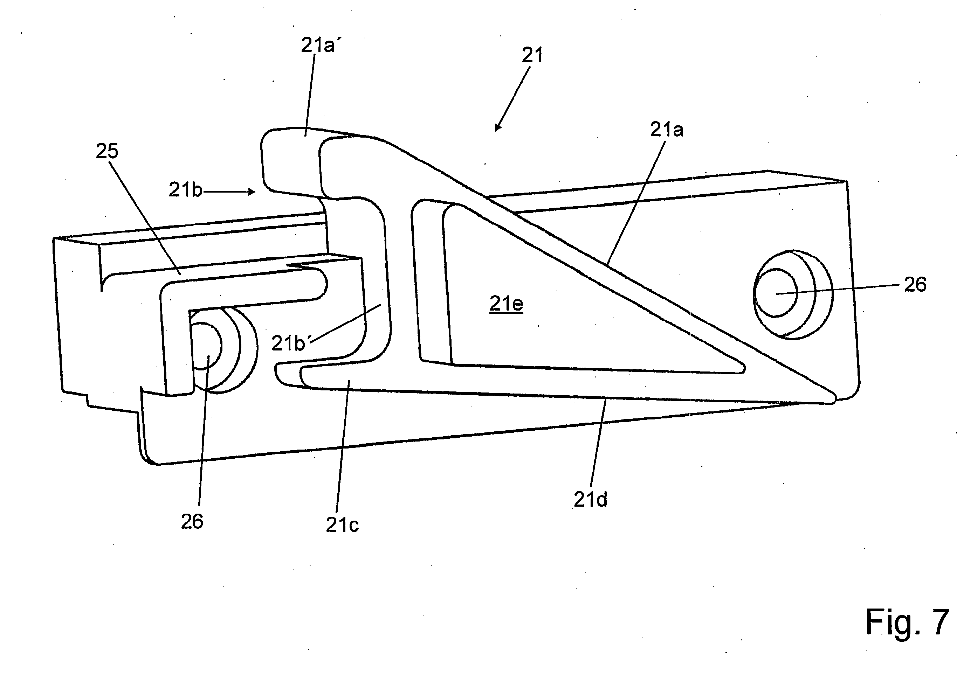

Das erste Riegelglied 21, das auch in Fig. 7 in weiteren Einzelheiten zu erkennen ist, ist als Kunststoffkörper gebildet, der einen Keilschnitt aufweist, wobei das erste Riegelglied 21 derart an dem distalen Ende des ersten Schenkels 4a des Längsträgers 4 angeordnet ist, das nach oben weisende Flächenabschnitte 21a eine Steigung von ca. 30° gegen die Horizontale definieren in Richtung auf das rückwertige Ende des Längsträgers 4. Der wesentliche Verlauf der Steigung 21 a ist linear, wobei ein Endbereich 21 a' der Steigung 21a im wesentlichen horizontal und damit ohne Steigung ausgebildet ist. Dieser Abschnitt 21 a' bildet einen vorspringenden Steg hinter einem Rücksprung 21b, der im wesentlichen eine vertikale Wandung 21b' aufweist. Unterhalb der vertikalen Wandung 21b' ist ein weiterer Steg 21c vorgesehen, der sich im wesentlichen parallel zu dem Steg 21 a erstreckt. Die Unterseite des Stegs 21 c definiert eine weitere Anlagefläche 21 d mit gering abfallender Steigung, deren Ende mit dem Beginn der Steigung 21 a zusammenfällt.

Nach innen weisend weist der Keilanschnitt des ersten Riegelglieds 21 einen vorspringenden, im wesentlichen dreieckigen Abschnitt 21e auf, dessen drei seitliche Kanten im wesentlichen parallel zu den Wandungen 21 a, 21 b' und 21d verlaufen.

Man erkennt in Fig. 7, dass das erste Riegelglied 21 zum Einsetzen in die Ausnehmung 15 und zum Aufsetzen auf die Laufbahn 14 ausgeformt ist und an einen entsprechenden Block, der in die Ausnehmung 15 und auf die Laufbahn 14 aufgesetzt wird, der vorspringende Keilabschnitt vorgesehen ist, der den Rücksprung 21 b sowie eine Zwischenebene 25 aufweist, wobei Durchbrechungen 26 vorgesehen sind, um eine Verschraubung mit dem Längsträger 4 vorzusehen.

Das Vorsehen des Rücksprungs 21 b, der durch die beiden Stege 21 a' und 21c begrenzt ist, mit der im Wesentlichen mittig zwischen den beiden Stegen 21a', 21c angeordneten Zwischenebene 25 definiert eine Kulissenführung für einen zwischen den entsprechenden Elementen zu führenden Zapfenabschnitt.

Man erkennt, dass das erste Riegelglied 21 fest an dem Längsträger 4 angeordnet ist. Es versteht sich, dass alternativ eine schwenkbare Anordnung möglich wäre, bei der das Riegelglied 21 anstelle der Vorspannung einer Feder nach dem Vorbeiführen des zweiten Riegelgliedes 22 nach oben schnellen und auf diese Art und Weise eine Blockierung bilden würde.

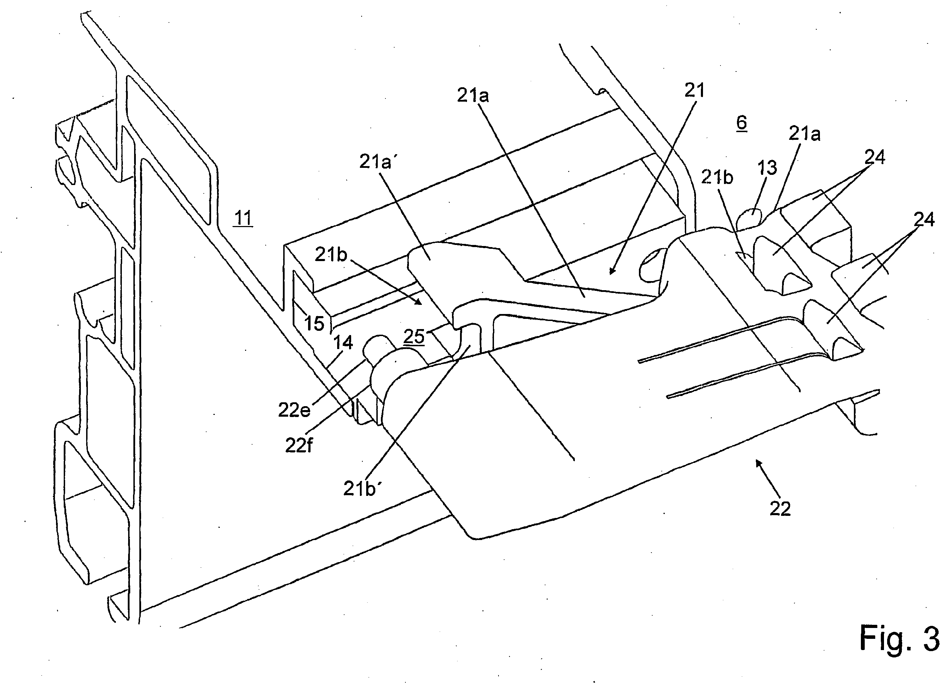

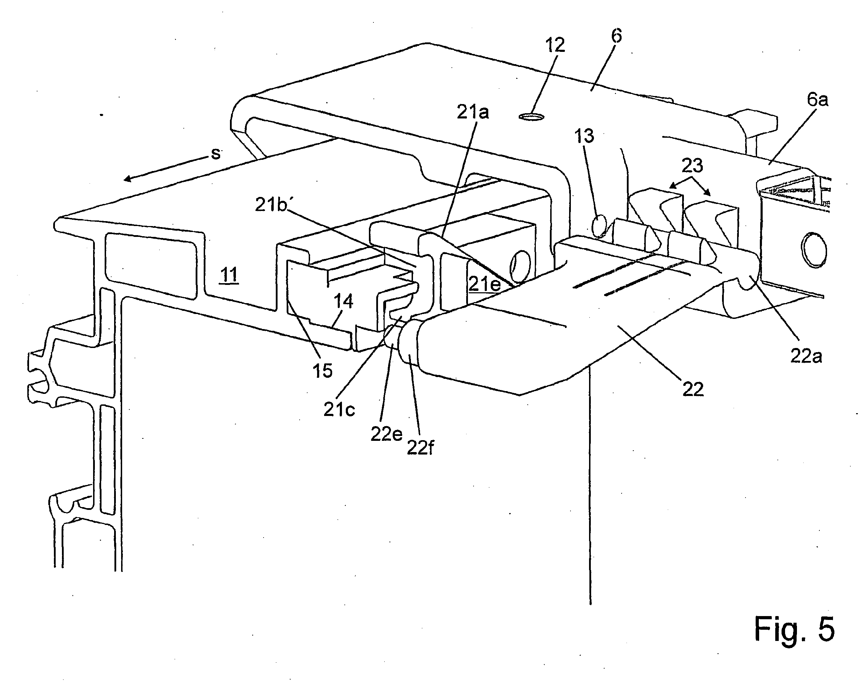

An dem Spriegel 8 im Bereich seiner Anbindung des Schlittens 6 ist, insbesondere in Fig. 3 und 5 gut zu erkennen, das zweite Riegelelement 22 derart eingehängt, dass es um die hierdurch gebildete Achse auf- und abschwenken kann. Hierzu weist das zweite Riegelelement 22 an dem einen Ende, an dem es eingehangen wird, eine rundstabartige Ausgestaltung 22a auf, an die sich zwei Durchberechungen 22b anschliessen, die das Einsetzen in klauenartige Aufnahmen 23 ermöglicht, die an einem Fortsatz 6a des Schlittens 6 seitlich vorgesehen sind und sonst zur Aufnahme von Zwangsfalthilfen für die Dachplane 5 geeignet sind. Im Bereich der Aufnahmen 23 ist auch ein anschlagartiges Widerlager angeordnet, das verhindert, dass das Riegelelement 22 aufgrund der Schwerkraft um die durch den Rundstab 22a gebildete Achse hindurch nach unten durchschwingt.

Das zweite Riegelglied 22 weist einen zentralen, langgestreckten, flachen Korpus 22c auf, an den sich an dem dem Rundstab 22a abgekehrten Ende ein Zapfenglied 22d anschliesst, von dem wenigstens einseitig und zweckmäßigerweise zur beiderseitigen Verwendbarkeit beidseitig ein gestufter Zapfenfortsatz 22d' absteht, der über den seitlichen Rand des Hauptkorpus 22c vorsteht. Die Abmessungen des Zapfenfortsatzes 22d' sind an die Stufungen des ersten Riegelgliedes 21 und hier insbesondere der Oberflächen 21a, 21b' und 21d sowie die Aussenkanten des Fortsatzes 21e derart angepasst, dass der weiter vorstehende, stärker verjüngte Zylinderabschnitt 22e des Fortsatzes 22d' mit seinem Umfang im wesentlichen mit den Aussenflächen zusammenwirkt, während der im Verhältnis zur Achse des zweiten Riegelgliedes 22 nach innen weisende zweite Zylinderabschnitt 22f des Fortsatzes 22d' im wesentlichen mit den Aussenwandungen des Fortsatzes 21e des ersten Riegelgliedes 21 umfangsmäßig zusammenwirkt.

Sowohl das erste Riegelglied 21 als auch das zweite Riegelglied 22 sind aus einem Kunststoff im Spritzgussverfahren hergestellt, so dass sie formgenau und kostengünstig hergestellt werden können.

Die Erfindung funktioniert nun wie folgt:

Ausgehend von einer Lage wie in Fig. 2 dargestellt, wird die Dachplane 5 mittels der Spriegel 8 und der daran angeschlossenen Schlitten 6 entlang der Längsträger 4 in Schließrichtung, die hier durch einen Pfeil s angedeutet ist, gezogen. Hierbei läuft das den Aufnahmen 23 abgewandte freie Ende des zweiten Riegelgliedes 22 mit den beiden Zylindern 22e, 22f auf die entsprechenden Flächen 21a bzw. die hierzu parallel ausgestaltete Ebene des Fortsatzes 21e auf und wird leicht angehoben. Um das zweite Riegelglied 22 in der richtigen Lage zu halten, kann vorgesehen sein, mittels einer Feder das zweite Riegelglied 22 gegen das anschlagartig Widerlager vorzuspannen.

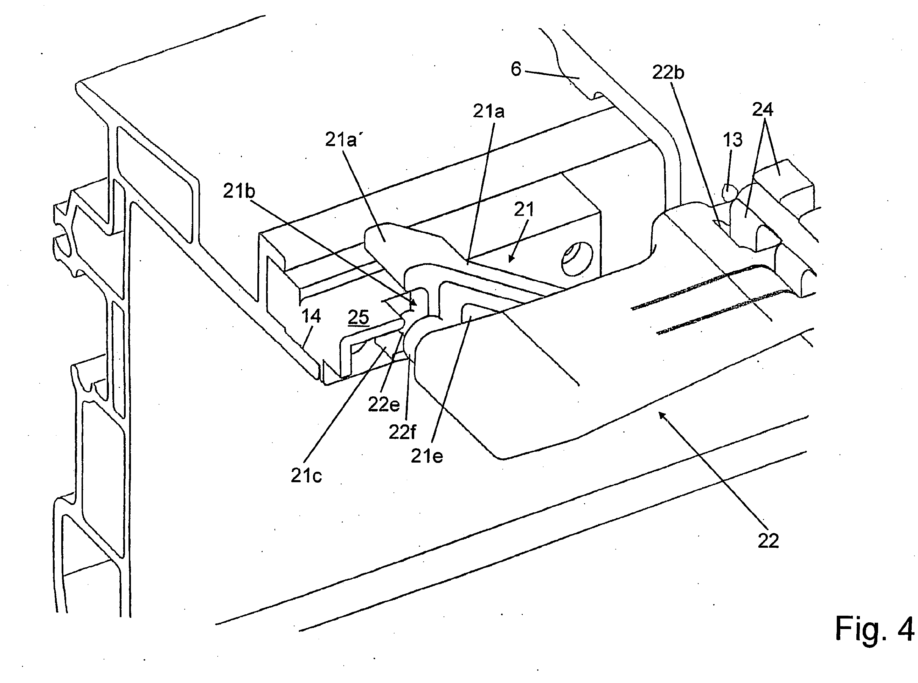

Wird der Spriegel 8 nun weiter in Schließrichtung s vorgezogen, wird das freie Ende des zweiten Riegelgliedes 22 über die Steigung 21 a und den abgefalteten Steg 21a' geschoben, bis die beiden Zylinderabschnitte 22e, 22f unter Einwirkung des Eigengewichts des zweiten Riegelgliedes 22 oder der Vorspannung der Feder auf den Keilabschnitt des ersten Riegelglieds 21 nachgelagerte Zwischenebene 25, die in etwa der halben Höhe des Rücksprungs 21b angeordnet ist. Die Zwischenebene 25 weist eine Aussparung auf, die für den Durchtritt des Zylinderabschnitts 22e dimensioniert ist und einen entsprechenden Abstand von der Wandung 21 b' aufweist. Wird der Spriegel 8 nun ausgehend von seiner in Fig. 3 dargestellten Lage entgegen der Schließöffnung s verlagert, schlägt der erste Zylinder 22e gegen die Wandung 21b' an, ebenso der zweite Zylinder 22f gegen die Stirnwand des Fortsatzes 21e. Eine sichere, formschlüssige Verriegelung ist hierdurch gewährleistet, die auch bei weiterer Betätigung entgegen der Schließrichtung s nicht überwindbar ist. Aufgrund des Eigengewichts des zweiten Riegelgliedes 22 bzw. der Vorspannung der Feder gleiten die beiden Zylinderabschnitte 22e, 22f hinab, bis der Zylinderabschnitt 22e auf der nach oben weisenden Fläche des Stegs 21 c zur Auflage gelangt, wie dies in Fig. 4 dargestellt ist.

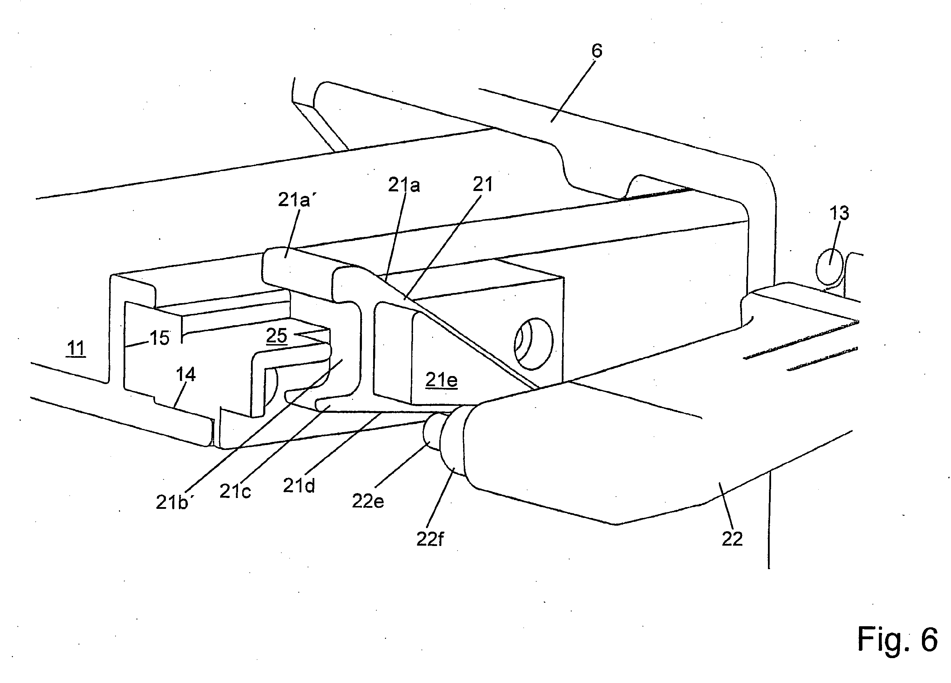

Wird, ausgehend von der in Fig. 4 dargestellten Position, der Spriegel 8 wieder in Schließrichtung s verlagert, gleitet der Zylinderabschnitt 22e über den Steg 21 c, und wird dann durch das Eigengewicht des zweiten Riegelgliedes 22 bzw. durch die Vorspannung der Feder in eine Höhe unterhalb des Stegs 21c verlagert. Durch die geringe Steigung der Anlagefläche 21d ist es möglich, dass der Zylinderabschnitt 22e entlang der Anlagefläche 21d vorbei gleitet, wobei sich der Zylinderabschnitt 22f entlang der Unterkante des Fortsatzes 21 e verlagert, wie in Fig. 6 dargestellt. Durch weitere Verlagerung entgegen der Schließrichtung s gelangt das zweite Riegelglied 22 schließlich außer Eingriff des ersten Riegelgliedes 21 und ermöglicht das weitere Verschieben des Spriegels 8 entgegen der Schließrichtung s. Gelangen die Zylinderabschnitte 22e, 22f außer Eingriff mit der unteren Anlagefläche 21d bzw. der unteren Kante des Fortsatzes 21 e, begeben sich diese zurück in eine im wesentlichen horizontale Ebene, in der bei erneutem Schließen die beiden Zylinderabschnitte 22e, 22f auf die Steigung 21 a wieder auflaufen.

Man erkennt, dass durch das Zusammenwirken der Zylinderabschnitte 22e, 22f und der Ausgestaltung des ersten Riegelgliedes 21 eine Kulissenführung gegeben ist, die durch das erstmalige Verlagern des Spriegels 8 in Schließrichtung verriegelt und durch das zweite Verlagern in Schließrichtung entriegelbar ist.

Die Erfindung ist vorstehend anhand eines Ausführungsbeispiels erläutert worden, bei dem das schwenkbare zweite Riegelglied dem Rollenwagen des Spriegels 8 und das feststehende erste Riegelglied 21 unmittelbar dem Längsträger 4 zugeordnet worden sind. Es versteht sich, dass es ebenso möglich ist, ein Riegelglied einem anderen Abschnitt des Spiegels 8 zuzuordnen und entsprechend das andere Riegelglied einem mit dem Längsträger 4 verbunden Teil, zum Beispiel an einer die Längstäger 4 verbindenden Traverse oder an einer im Anschluss an die Längstäger 4 vorgesehene Wand insbesondere im vorderen Bereich des Verdecks, zuzuordnen.

Die Erfindung ist vorstehend anhand eines Ausführungsbeispiels erläutert worden, bei dem das schwenkbare zweite Riegelglied dem Spriegel 8 und das feststehende erste Riegelglied 21 dem Längsträger 4 zugeordnet worden sind. Es versteht sich, dass in kinematischer Umkehr das Riegelglied mit Kulissenausnehmung am Spriegel 8 angeordnet werden kann, während das schwenkbare Riegelglied dem Längsträger zugeordnet ist.

## Patentansprüche

1. Verdeckgestell für einen Planenaufbau, umfassend
eine Mehrzahl von entlang seitlicher Längsträger (4) verlagerbarer Spriegel (8), und
eine Verriegelungseinrichtung (20) für einen zu verriegelnden Spriegel (8), wobei die Verriegelungseinrichtung (20) ein erstes Riegelglied (21) mit einer in eine Richtung ausgebildeten Steigung (21 a) und ein zweites Riegelglied (22), das über die Steigung des ersten Riegelgliedes führbar ist, aufweist,
wobei das erste Riegelglied (21) einem von einem der Spriegel (8), der zu verriegeln ist, und einem ersten der Längsträger (4) zugeordnet ist und das das zweite Riegelglied (22) dem anderen von zu verriegelndem Spriegel (8) und erstem der Längsträger (4) zugeordnet ist,
**dadurch gekennzeichnet,**
**dass** das erste Riegelglied (21) eine Kulissenführung (21 b, 21 a', 21, 25) aufweist, die dem zweiten Riegelglied (22) eine Umgehung der Steigung (21 a) ermöglicht.

2. Verdeckgestell nach Anspruch 1, **dadurch gekennzeichnet, dass** das zweite Riegelglied (22) ein mit der Steigung (21 a) zusammenwirkendes Gleitelement (22e) ausweist.

3. Verdeckgestell nach Anspruch 1 oder 2, **dadurch gekennzeichnet, dass** das zweite Riegelglied (22) um eine Achse faltbar oder schwenkbar ist.

4. Verdeckgestell nach einem der Ansprüche 1 bis 3, **dadurch gekennzeichnet, dass** das erste Riegelglied (21) eine Fläche (21 b') aufweist, in der ein Rücksprung (21b) zum Definieren der Kulissenführung ausgebildet ist.

5. Verdeckgestell nach einem der Ansprüche 1 bis 4, **dadurch gekennzeichnet, dass** das erste Riegelglied (21) im Bereich der Kulissenführung (21b, 21a', 21, 25) einen Führungsabschnitt (21c) aufweist, der erst bei Ziehen des Spriegels in Schließrichtung (s) des Verdeckgestells überwindbar ist.

6. Verdeckgestell nach einem der Ansprüche 1 bis 5, **dadurch gekennzeichnet, dass** das erste Riegelglied (21) an dem einen von zu verriegelndem Spriegel (8) und erstem der Längsträger (4) ortsfest angeordnet ist.

7. Verdeckgestell nach einem der Ansprüche 1 bis 6, **dadurch gekennzeichnet, dass** das erste Riegelglied (21) eine gegenüber der Horizontalen geneigte Rückführfläche (21d) aufweist.

8. Verdeckgestell nach einem der Ansprüche 1 bis 7, **dadurch gekennzeichnet, dass** das zweite Riegelglied (22) an dem anderen von zu verriegelndem Spriegel (8) und erstem der Längsträger (4) einhängbar ist.

9. Verdeckgestell nach einem der Ansprüche 1 bis 8, **dadurch gekennzeichnet, dass** wenigstens eines von erstem Riegelglied (21) und zweitem Riegelglied (22) aus Kunststoff hergestellt ist.

10. Verdeckgestell nach einem der Ansprüche 1 bis 9, **dadurch gekennzeichnet, dass** das erste und das zweite Riegelglied (21, 22) in seitlicher Verlängerung eines oberen Schenkels (4a) des ersten Längsträgers (4) angeordnet sind.

## Claims

1. A canopy frame for a tarpaulin cover, including
a plurality of tarpaulin bows (8) which can be shifted along lateral longitudinal beams (4), and
a locking device (20) for a tarpaulin bow (8) which is to be locked, wherein the locking device (20) has a first locking member (21) with an incline (21 a) formed in one direction and a second locking member (22) which can be guided over the incline of the first locking member,
wherein the first locking member (21) is allocated to one of one of the tarpaulin bows (8), which is to be locked, and a first of the longitudinal beams (4) and the second locking member (22) is allocated to the other of the tarpaulin bow (8) which is to be locked and a first of the longitudinal beams (4),
**characterised in that**
the first locking member (21) has a channel guide (21 b, 21 a', 21, 25) which makes it possible for the locking member (22) to bypass the incline (21 a).

2. The canopy frame according to Claim 1, **characterised in that** the second locking member (22) has a sliding member (22e) which cooperates with the incline (21 a).

3. The canopy frame according to Claim 1 or 2, **characterised in that** the second locking member (22) can be folded or pivoted about an axis.

4. The canopy frame according to one of Claims 1 to 3, **characterised in that** the first locking member (21) has a surface (21 b'), in which there is formed a recess (21 b) for defining the channel guide.

5. The canopy frame according to one of Claims 1 to 4, **characterised in that** the first locking member (21) has, in the area of the channel guide (21b, 21 a', 21, 25), a guide section (21c) which can be overcome only by pulling the tarpaulin bow in the closing direction (s) of the canopy frame.

6. The canopy frame according to one of Claims 1 to 5, **characterised in that** the first locking member (21) is arranged in a fixed manner at one of the tarpaulin bow (8) to be locked and the first of the longitudinal beams (4).

7. The canopy frame according to one of Claims 1 to 6, **characterised in that** the first locking member (21) has a return surface (21d) which is inclined relative to the horizontal.

8. The canopy frame according to one of Claims 1 to 7, **characterised in that** the second locking member (22) can be connected to the other of the tarpaulin bow (8) to be locked and the first of the longitudinal beams (4).

9. The canopy frame according to one of Claims 1 to 8, **characterised in that** at least one of the first locking member (21) and the second locking member (22) is made of plastic.

10. The canopy frame according to one of Claims 1 to 9, **characterised in that** the first and second locking member (21, 22) are arranged in the lateral extension of an upper leg (4a) of the first longitudinal beam (4).

## Revendications

1. Bâti de capote destiné à une structure bâchée, ledit bâti comportant :
une pluralité d'arceaux (8) déplaçables le long de longerons latéraux (4), et
un dispositif de verrouillage (20) destiné à un arceau à verrouiller (8), le dispositif de verrouillage (20) comportant un premier élément de verrouillage (21) qui présente une rampe (21 a) conformée dans une direction et un deuxième élément de verrouillage (22) qui peut être guidé sur la rampe du premier élément de verrouillage,
le premier élément de verrouillage (21) étant associé à l'un parmi l'un des arceaux (8) à verrouiller et un premier des longerons (4) et le deuxième élément de verrouillage (22) étant associé à l'autre parmi un arceau à verrouiller (8) et un premier des longerons (4),
**caractérisé en ce que** le premier élément de verrouillage (21) comporte un guide de coulisse (21 b, 21 a', 21, 25) qui permet au deuxième élément de verrouillage (22) de contourner la rampe (21 a).

2. Bâti de capote selon la revendication 1, **caractérisé en ce que** le deuxième élément de verrouillage (22) comporte un élément glissant (22e) qui coopère avec la rampe (21 a).

3. Bâti de capote selon la revendication 1 ou 2, **caractérisé en ce que** le deuxième élément de verrouillage (22) est apte à pivoter ou se plier autour d'un axe.

4. Bâti de capote selon l'une des revendications 1 à 3, **caractérisé en ce que** le premier élément de verrouillage (21) présente une surface (21b') dans laquelle est conformé un retrait (21 b) destiné à définir le guide de coulisse.

5. Bâti de capote selon l'une des revendications 1 à 4, **caractérisé en ce que** le premier élément de verrouillage (21) comporte dans la région du guide de coulisse (21b, 21 a', 21, 25) une portion de guidage (21c) qui ne peut être surmontée que lorsque l'arceau est tiré dans le sens (s) de fermeture du bâti de capote.

6. Bâti de capote selon l'une des revendications 1 à 5, **caractérisé en ce que** le premier élément de verrouillage (21) est disposé de façon fixe au niveau de l'un parmi un arceau à verrouiller (8) et un premier des longerons (4).

7. Bâti de capote selon l'une des revendications 1 à 6, **caractérisé en ce que** le premier élément de verrouillage (21) présente une surface de retour (21d) qui est inclinée par rapport à l'horizontale.

8. Bâti de capote selon l'une des revendications 1 à 7, **caractérisé en ce que** le deuxième élément de verrouillage (22) peut être accroché à l'autre parmi un arceau à verrouiller (8) et un premier des longerons (4).

9. Bâti de capote selon l'une des revendications 1 à 8, **caractérisé en ce que** l'un au moins parmi un premier élément de verrouillage (21) et un deuxième élément de verrouillage (22) est fabriqué à partir d'une matière plastique.

10. Bâti de capote selon l'une des revendications 1 à 9, **caractérisé en ce que** le premier et le deuxième éléments de verrouillage (21, 22) sont disposés dans un prolongement latéral d'une branche supérieure (4a) du premier longeron (4).
